# FASCICULE DE BREVET EUROPEEN

(11) **EP 0 489 675 B1**
(45) Date de publication et mention de la délivrance du brevet: **06.12.1995**
(21) Numéro de dépôt: 91470026.5
(22) Date de dépôt: 20.09.1991
(51) Int. Cl.: F27D 3/12, B65G 15/54, F27B 9/24

(54) **Perfectionnement aux tapis transporteurs métalliques**
Verbesserung bei Förderbändern aus Metall
Improvement in metallic conveyor belts

(30) Priorité: 03.12.1990 FR 9015266
(43) Date de publication de la demande: 10.06.1992
(73) Titulaire: SOCIETE ANONYME DES ETABLISSEMENTS GANTOIS, F-88100 Saint Die (FR)
(72) Inventeur: Grandjean, André, F-88100 Taintrux (FR)
(74) Mandataire: Poupon, Michel

(56) Documents cités:
- GB-A- 594 316
- US-A- 1 938 293
- US-A- 3 537 572

## Description

La présente invention a pour objet un tapis transporteur métallique, encore appelé bande transporteuse, en particulier utilisable dans des conditions de température élevées et de contraintes mécaniques sévères, tapis transporteur composé essentiellement d'une bande métallique articulée constituée par l'assemblage de spires métalliques de liaison, de barrettes perpendiculaires au sens d'avancement du tapis et de plaquettes latérales.

L'invention concerne plus particulièrement des tapis transporteurs pouvant être utilisés à très hautes températures, par exemple de 700° à 1200° (ceci non limitativement) pour des traitements thermiques de matériaux en tout genre, généralement par passage de ceux-ci dans des fours tunnels. On comprendra néanmoins que l'invention peut être transportée à tout type de tapis, indépendamment du type de maillage.

De manière générale, ces tapis transporteurs sont entraînés par cylindres et par adhérence ou par friction. On ne reviendra pas ultérieurement sur cet aspect, secondaire en l'espèce et connu de l'homme de l'art.

Ces tapis transporteurs sont généralement réalisés en acier réfractaire. En raison des conditions élevées de température, il se produit, lors des cycles de chauffage/refroidissement, une dilatation inévitable et répétée des différents composants du tapis, ce qui entraîne à la longue des ruptures de certaines pièces. En effet, les tapis connus comportent des pièces soudées, ce qui entraîne une modification structurelle de l'acier, donc des risques de rupture au niveau desdites soudures. C'est le cas en particulier au niveau de la liaison entre les barrettes et les plaquettes latérales comme décrit dans le brevet US-A-1 938 293.

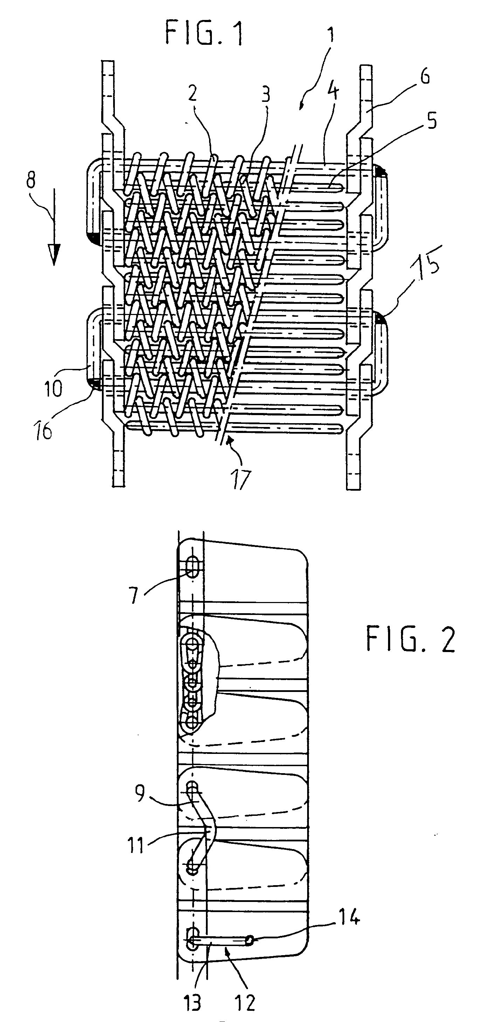

En effet, les barrettes sont soudées en un point haut sur les plaquettes correspondantes, comme représenté à la figure 2. La barrette comporte donc un retour vertical dont l'extrémité est soudée sur la plaquette. Ainsi la dilatation de la tringle entraîne un basculement de la plaquette en direction du tapis, donc une détérioration et souvent une rupture des plaquettes.

De plus, les retours verticaux sont en fait des aspérités qui risquent d'accrocher les rebords contre lesquels défile le tapis transporteur, d'où des risques supplémentaires de détérioration.

L'invention a pour but de remédier à ces différents inconvénients en proposant un tapis transporteur dont les différents éléments structurels coopèrent à une meilleure longévité dudit tapis.

Conformément à l'invention, on propose en effet un tapis transporteur métallique en particulier utilisable dans des conditions de température élevées et de contraintes mécaniques sévères, tapis transporteur composé essentiellement d'une bande métallique articulée constituée par l'assemblage de spires métalliques de liaison, de barrettes perpendiculaires au sens d'avancement du tapis et de plaquettes latérales, caractérisé en ce que les barrettes sont articulées chacune sur deux trous oblongs de deux plaquettes adjacentes qui se chevauchent au niveau de ladite articulation, les barrettes étant désolidarisées des plaquettes et étant reliées deux à deux, selon un pas déterminé, par des pontets de matière situés de l'autre côté du tapis par rapport aux plaquettes.

Grâce à cette structure, le trou oblong permet un rattrapage du travail en dilatation de tapis, ce qui évite tout risque de rupture.

Par ailleurs, il n'existe aucune soudure, donc pas de modification structurelle de l'acier utilisé, au niveau des liaisons entre les tringles et les plaquettes.

Cette structure présente de multiples avantages :
- le tapis peut s'allonger sans créer de contraintes supplémentaires au niveau de la soudure du pontet sur les barrettes ;
- le pontet améliore l'assise verticale de la bordure et facilite le glissement (sans aspérités) ;
- les plaquettes étant désolidarisées de la masse du tapis, les dilatations ne sont pas subies par celles-ci du fait de la dilatation transversale des barrettes. On respecte donc la verticalité des plaquettes.

On comprendra mieux l'invention à l'aide de la description faite ci-après d'un mode de mise en oeuvre donné à titre d'exemple non limitatif en référence aux dessins annexés dans lesquels :
- la figure 1 est une vue en plan dune portion de tapis transporteur conforme à l'invention ;
- la figure 2 est une vue en élévation latérale de la portion de tapis transporteur de la figure 1, avec une illustration de l'art antérieur.

Le tapis transporteur, généralement référencé (1) se compose essentiellement de l'assemblage par exemple de deux nappes de spires (2,3) inclinées l'une par rapport à l'autre pour donner au tapis la possibilité de bien se guider, les spires étant articulées de manière en elle-même connue autour de barrettes transversales (4,5).

Selon un pas déterminé certaines barrettes (4) sont reliées à des plaquettes latérales (6) qu'elles traversent au niveau de trous oblongs (7), visibles à la figure 2, dont le grand axe est parallèle au sens de la marche (8) visualisée à la figure 1.

Les plaquettes sont disposées verticalement, les deux nappes (2,3) formant un support sensiblement horizontal.

La forme des plaquettes est telle que celles-ci se chevauchent au niveau de leurs trous oblongs respectifs, les plaquettes étant en conséquence solidarisées par des barrettes (4), chaque plaquette comportant deux trous oblongs.

Selon une caractéristique essentielle de l'invention, on prévoiera que deux barrettes de liaison soient reliées par un pontet triangulaire (9), représenté à la figure 2, en laissant entre elles au moins une , par exemple trois, barrettes libres (5).

L'existence de ce pontet métallique présente en outre de nombreux avantages à savoir :
- amélioration des propriétés de glissement des bandes du tapis contre les guides ou les parois des fours-tunnels du fait du chant latéral (10),
- amélioration du maintien vertical des bordures en créant un point d'appui supplémentaire (11) contre le sommet du triangle (9),
- augmentation des possibilités de dilatation des tringles grâce à la partie coudée (11).

Le pontet peut affecter également une forme circulaire, ou toute autre forme fonctionnnellement équivalente.

On a représenté par (12) une illustration de l'art antérieur, avec un retour vertical (13) soudé en (14) sur une plaquette.

A la figure 1, on a représenté les soudures (15,16) qui sont à l'extérieur du tapis transporteur.

Néanmoins il s'agit de zones très sollicitées à la fois en frottement et en cisaillement.

En variante, non représentée, on pourra prévoir que les soudures soient effectuées non plus en bordure mais au milieu des barrettes au niveau du point (17) médian, du côté opposé à la surface de travail de manière à préserver celle-ci.

Ainsi, les soudures sont réalisées le plus près possible de la fibre neutre du tapis par rapport au cisaillement longitudinal.

Avantageusement, les soudures seront légèrement décalées et alternées, l'une par rapport à l'autre, transversalement par rapport audit axe médian.

Au niveau des soudures, les mailles seront découpées de manière adéquate.

## Revendications

1. Tapis transporteur métallique (1) en particulier utilisable dans des conditions de température élevées et de contraintes mécaniques sévères, tapis transporteur composé essentiellement d'une bande métallique articulée constituée par l'assemblage de spires métalliques (2,3) de liaison, de barrettes (4,5) perpendiculaires au sens d'avancement du tapis et de plaquettes latérales, caractérisé en ce que les barrettes (4) sont articulées sur les plaquettes (6) qui comportent chacune à cet effet au moins un trou oblong (7) au niveau de l'articulation desdites barrettes par rapport à la plaquette, les trous oblongs (7) respectifs de deux plaquettes (6) adjacentes se chevauchent au niveau de l'articulation, les barrettes étant désolidarisées des plaquettes et étant reliées deux à deux, selon un pas déterminé, par des pontets (9) de matière situés de l'autre côté du tapis par rapport aux plaquettes.

2. Tapis transporteur selon la revendication 1, caractérisé en ce que les pontets (9) sont triangulaires ou autre forme.

3. Tapis transporteur selon l'une des revendications 1 et 2, caractérisé en ce que entre deux barrettes (4) reliées par un pontet (9) restent au moins une barrette libre (5).

4. Tapis transporteur selon l'une des revendications 1 à 3, caractérisé en ce que les barrettes sont soudées entre elles en des points latéraux (15,16).

5. Tapis transporteur selon l'une des revendications 1 à 3, caractérisé en ce que les barrettes sont soudées entre elles le plus près possible de la fibre neutre du tapis.

6. Tapis transporteur selon la revendication 5, caractérisé en ce que les soudures sont légèrement décalées et alternées, l'une par rapport à l'autre, transversalement par rapport à l'axe médian du tapis.

## Patentansprüche

1. Förderband (1) aus Metall, das insbesondere bei erhöhten Umgebungstemperaturen und bei hoher mechanischer Belastung einsetzbar ist und das im wesentlichen ein gelenkiges Band aus Metall umfaßt, das durch Zusammenfügen von verbindenden Windungen (2, 3) aus Metall, von zur Bewegungsrichtung des Bandes rechtwinklig ausgerichteten Stäben (4, 5) und von seitlichen Platten gebildet ist, **dadurch gekennzeichnet**, daß die Stäbe (4) an den Platten (6) gelenkig gelagert sind, die zu diesem Zweck im Bereich der gelenkigen Lagerung der Stäbe bezüglich der Platten wenigstens ein Langloch (7) aufweisen, wobei die jeweiligen Langlöcher (7) zweier benachbarter Platten (6) sich im Bereich der gelenkigen Lagerung überlappen und wobei die Stäbe von den Platten getrennt und untereinander paarweise in einem bestimmten Abstand durch Bügel (9) verbunden sind, die bezüglich der Platten auf entgegengesetzten Seiten des Bandes angeordnet sind.

2. Förderband nach Anspruch 1, dadurch gekennzeichnet, daß die Bügel (9) von dreieckiger oder anderer Gestalt sind.

3. Förderband nach einem der Ansprüche 1 und 2, dadurch gekennzeichnet, daß zwischen den beiden durch einen Bügel (9) verbundenen Stäben (4) wenigstens ein freier Stab (5) vorhanden ist.

4. Förderband nach einem der Ansprüche 1 bis 3, dadurch gekennzeichnet, daß die Stäbe an seitlichen Orten (15, 16) miteinander verschweißt sind.

5. Förderband nach einem der Ansprüche 1 bis 3, dadurch gekennzeichnet, daß die Stäbe möglichst nah an der neutralen Linie des Bandes miteinander verschweißt sind.

6. Förderband nach Anspruch 5, dadurch gekennzeichnet, daß die Schweißstellen bezüglich der mittleren Achse des Bandes in Querrichtung aufeinanderfolgend leicht versetzt sind.

## Claims

1. Metallic conveyor belt (1), more especially utilisable in conditions of high temperature and severe mechanical constraints, said conveyor belt comprising essentially an articulated metallic belt formed by the assembling of metallic helical connection pieces (2,3), small bars (4,5) which are perpendicular to the advancing direction of the belt, and small lateral plates, characterised in that the small bars (4) are articulated on the small plates (6) which each comprise, for this purpose, at least one oblong-shaped hole (7) at the level of the articulation of said small bars in relation to the small plate, the respective oblong-shaped holes (7) of two adjacent small plates (6) overlapping at the level of the articulation, the small bars not being integral with the small plates and being connected two by two, according to an established step, by bridging members (9) formed from material, said bridging members being situated on the other side of the belt in relation to the small plates.

2. Conveyor belt according to claim 1, characterised in that the bridging members (9) are of a triangular or other configuration.

3. Conveyor belt according to one of claims 1 and 2, characterised in that at least one free small bar (5) remains between two small bars (4) connected by a bridging member (9).

4. Conveyor belt according to one of claims 1 to 3, characterised in that the small bars are welded together at lateral points (15,16).

5. Conveyor belt according to one of claims 1 to 3, characterised in that the small bars are welded together as closely as possible to the neutral fibre of the belt.

6. Conveyor belt according to claim 5, characterised in that the welds are slightly offset and transversely alternated, in relation to one another, relative to the median axis of the belt.
